Europäisches Patentamt

European Patent Office

Office européen des brevets

(19)

(11) Veröffentlichungsnummer: **0 106 111**
**B1**

(12) # EUROPÄISCHE PATENTSCHRIFT

(45) Veröffentlichungstag der Patentschrift:
09.12.87

(21) Anmeldenummer: 83108754.9

(22) Anmeldetag: 06.09.83

(51) Int. Cl.⁴: **C 08 F 222/02,** C 08 F 220/04,
C 11 D 3/37, C 02 F 5/10 //
(C08F222/02, 220:04),
(C08F220/04, 222:02)

(54) **Verfahren einer kontinuierlichen Herstellung von Copolymerisaten aus monoethylenisch ungesättigten Mono- und Dicarbonsäuren.**

(30) Priorität: **11.09.82 DE 3233778**

(43) Veröffentlichungstag der Anmeldung:
**25.04.84 Patentblatt 84/17**

(45) Bekanntmachung des Hinweises auf die Patenterteilung:
**09.12.87 Patentblatt 87/50**

(84) Benannte Vertragsstaaten:
**AT BE CH DE FR GB IT LI NL SE**

(56) Entgegenhaltungen:
**EP - A - 0 058 073
EP - A - 0 075 820
FR - A - 2 176 104
US - A - 3 258 491**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Denzinger, Walter, Wormser Landstrasse 65,
D-6720 Speyer (DE)**
Erfinder: **Hartmann, Heinrich, Dr., Weinheimer
Strasse 46, D-6703 Limburgerhof (DE)**
Erfinder: **Trieselt, Wolfgang, Dr., Alwin-Mittasch-Platz 1,
D-6700 Ludwigshafen (DE)**
Erfinder: **Hettche, Albert, Dr., Kleiststrasse 12,
D-6717 Hessheim (DE)**
Erfinder: **Schneider, Rolf, Dr., Feldbergstrasse 21,
D-6800 Mannheim 1 (DE)**
Erfinder: **Raubenheimer, Hans-Juergen, Benzstrasse 6,
D-6834 Ketsch (DE)**

**Beschreibung**

Die Erfindung betrifft ein Verfahren zur Herstellung von Copolymerisaten monoethylenisch ungesättigter Mono- und Dicarbonsäuren durch kontinuierliche radikalische Copolymerisation der Monomeren in wässrigem Medium, die für die Verwendung als Inkrustierungsinhibitoren oder für die scaling inhibition insbesondere geeignet sind.

Gegenstand der älteren Patentanmeldung DE-A-3 140 383 ist ein Verfahren zur kontinuierlichen Copolymerisation von ungesättigten Mono- und Dicarbonsäuren. Bei dieser Methode arbeitet man ohne Lösungsmittel (Substanzpolymerisation) bei Temperaturen von 200 bis 400 °C. Hierbei erhält man relativ niedermolekulare Produkte. Diese besitzen einen noch zu hohen Restmonomerengehalt und sind für die Verwendung als z.B. Inkrustierungsinhibitoren in Waschmitteln nocht nicht optimal geeignet.

Einen grossen Fortschritt stellt der Vorschlag der älteren Patentanmeldung DE-A-3 147 489 dar. Sie betrifft ein Verfahren zur Herstellung von Copolymerisaten, die monoethylenisch ungesättigte Mono- und Dicarbonsäuren als Monomereinheiten einpolymerisiert enthalten, bei dem man – jeweils bezogen auf die Summe der Monomeren

a) 10 bis 60 Gew.-% einer monoethylenisch ungesättigten Dicarbonsäure mit 4 bis 6 C-Atomen, ihres Salzes und/oder gegebenenfalls ihres Anhydrids,

b) 90 bis 40 Gew.-% einer monoethylenisch ungesättigten Monocarbonsäure mit 3 bis 10 C-Atomen und/oder ihres Salzes und

c) 0 bis 20 Gew.-% eines sonstigen carboxylgruppenfreien monoethylenisch ungesättigten, mit a) und b) copolymerisierbaren Monomeren in Gegenwart von 0,5 bis 5 Gew.-% eines wasserlöslichen radikalbildenden Initiators in wässrigem Medium bei 60 bis 150 °C polymerisiert und gegebenenfalls die Anhydridgruppen verseift, das dadurch gekennzeichnet ist, dass man die Monomeren a) und b) in einer Form einsetzt, dass sie während der Polymerisationsreaktion zu 20 bis 80% neutralisiert sind.

Die damit erhaltenen Produkte weisen einen sehr geringen Restmonomerengehalt auf und wirken als starke Inkrustierungsinhibitoren. Das Verfahren zu ihrer Herstellung läuft diskontinuierlich ab und ist zeit- und energieaufwendig, da die Dicarbonsäure im Reaktor vorgelegt und die Monocarbonsäure über einen längeren Zeitraum (bis zu 10 h) zudosiert werden muss.

Das Ziel der Erfindung bestand darin, ein Verfahren zur Herstellung solcher gemäss der älteren Anmeldung erhältlicher Copolymerisate zu finden, das schneller abläuft und demzufolge kostengünstiger und unter Verbrauch von weniger Energie arbeitet.

Das Ziel der Erfindung wird erreicht mit einem Verfahren zur Herstellung von Copolymerisaten, die monoethylenisch ungesättigte Mono- und Dicarbonsäuren als Monomereinheiten einpolymerisiert enthalten und die einen K-Wert zwischen 8 und 100 (bestimmt nach Fikentscher an 2%igen wässrigen Lösungen der vollneutralisierten Salze bei 25 °C) haben, bei dem man – jeweils bezogen auf die Summe der Monomeren

a) 10 bis 60 Gew.-% einer monoethylenisch ungesättigten Dicarbonsäure mit 4 bis 6 C-Atomen, ihres Salzes und/oder gegebenenfalls ihres Anhydrids,

b) 90 bis 40 Gew.-% einer monoethylenisch ungesättigten Monocarbonsäure mit 3 bis 10 C-Atomen und/oder ihres Salzes und

c) 0 bis 20 Gew.-% eines sonstigen carboxylgruppenfreien monoethylenisch ungesättigten, mit a) und b) copolymerisierbaren Monomeren in Gegenwart von 0,5 bis 5 Gew.-% eines wasserlöslichen radikalbildenden Initiators in wässrigem Medium bei 60 bis 150 °C polymerisiert und gegebenenfalls die Anhydridgruppen verseift, und wobei man die Monomeren a) und b) in einer Form einsetzt, dass sie während der Polymerisationsreaktion zu 20 bis 80% neutralisiert sind, wenn man die Copolymerisation in einer aus mehreren Reaktoren bestehenden Reaktorkaskade kontinuierlich führt, wobei man in alle Reaktoren eine wässrige Lösung eines bereits hergestellten Copolymerisats aus a), b) und gegebenenfalls c) vorlegt, auf die erforderliche Reaktionstemperatur erhitzt, in den ersten Reaktor die Gesamtmenge an gegebenenfalls teilneutralisiertem a), mindestens 40 Gew.-% an gegebenenfalls teilneutralisiertem b), gegebenenfalls ganz oder teilweise c) und die zur Polymerisation ganz oder zum Teil notwendige Menge an Initiator sowie gegebenenfalls noch die zur definitionsgemässen Neutralisation nötige Menge eines Neutralisierungsmittels eindosiert, die Restmenge an gegebenenfalls neutralisiertem b) und gegebenenfalls c), die gegebenenfalls notwendige Restmenge an Initiator und Neutralisationsmittel in den zweiten Reaktor oder verteilt in den zweiten und die folgenden Reaktoren zugibt, und bei einer Verweilzeit von 0,5 bis 8 Stunden die Reaktionsteilnehmer aufeinander einwirken lässt.

Man geht hierbei so vor, dass in einer Reaktionskaskade aus mehreren, vorzugsweise 3 Reaktoren, gearbeitet wird. Die Reaktoren sind vorzugsweise Rührkessel. Jedoch sind auch statische Mischer oder Rohrreaktoren geeignet. Man legt, ehe die Reaktion gestartet wird, in allen Reaktoren zunächst eine wässrige Lösung eines bereits erhaltenen Copolymerisats, beispielsweise gemäss der oben erwähnten Patentanmeldung DE-A-3 147 489, vor. Anschliessend bringt man die Reaktion nach Aufheizen des Reaktorinhalts auf die definitionsgemässe Reaktionstemperatur in Gang, indem man in den ersten Kessel die gesamte, gegebenenfalls teilneutralisierte Dicarbonsäuremenge und mindestens 40 Gew.% der benötigten, gegebenenfalls teilneutralisierten Monocarbonsäure zusammen mit der zur Initiierung der Reaktion in diesem Reaktor benötigten Initiatormenge und der gegebenenfalls erforderlichen Menge an Neutralisierungsmittel zur 20 bis 80%igen Neutralisierung der Säuren zugibt. Gleichzeitig dosiert man den Rest an gegebenenfalls neutralisierter Monocarbonsäure, soweit nicht schon die Gesamtmenge in den ersten Reaktor gegeben wurde, zusammen mit gegebenenfalls noch erforderlichen Mengen an Initiator und Neutralisationsmittel, sowie gegebenenfalls die sonstigen Comonomeren c), in den zweiten oder verteilt in den zweiten und die folgenden Reaktoren ein, und zieht die Reaktionslösung kontinuierlich bei Verweilzeiten von 0,5 bis 8, vorzugsweise 1 bis 5 Stunden aus dem letzten Reaktor ab.

Ausgangscomonomeren a) des erfindungsgemässen Verfahrens sind monoethylenisch ungesättigte Dicarbonsäuren, ihre Salze und/oder, falls es die räumliche Stellung der Carboxylgruppen zulässt (cis-Position), deren Anhydride. Geeignete Dicarbonsäuren, die 4 bis 6 C-Atome enthalten, sind beispielsweise Maleinsäure, Itaconsäure, Mesaconsäure, Fumarsäure, Methylenmalonsäure, Citraconsäure, deren Salze oder gegebenenfalls Anhydride.

Ausgangsmonomere b) sind monoethylenisch ungesättigte Monocarbonsäuren und/oder ihre Salze. Sie besitzen 3 bis 10 C-Atome im Molekül, und es seien hier vor allem Acrylsäure oder Methacrylsäure genannt, jedoch sind aber auch z.B. Vinylessigsäure, Allylessigsäure, Propylidenessigsäure, Ethylidenpropionsäure, Dimethylacrylsäure oder $C_2$- bis $C_4$-Alkylhalbester der obengenannten Dicarbonsäuren, vor allem der Maleinsäure einsetzbar. Auch Mischungen aus den Gruppen a) und b) sind verwendbar.

Unter «Salzen» der unter a) und b) genannten Carbonsäuren sind im erfindungsgemässen Sinne Alkalimetallsalze, vorzugsweise Natrium- oder Kaliumsalze, Ammoniumsalze und organische Aminsalze, wie die der Tri–$C_1$- bis $C_4$-Alkylamine, des Hydroxyethylamins, der Mono-, Di- oder Tri–$C_1$- bis $C_4$-alkanolamine oder deren Mischungen zu verstehen. Im folgenden soll der Einfachheit halber nach wie vor von «Salzen» die Rede sein.

Beim Einsatz der Monomeren a) und b) ist darauf zu achten, dass sie zusammen – d.h. die Summe von a) und b) – zu 20 bis 80%, vorzugsweise 30 bis 70%, neutralisiert sind, d.h. sie liegen in teilneutralisierter Form vor. Dies kann dadurch erfolgen, dass man die Dicarbonsäuren oder einen Teil davon in Form ihrer Salze, und die Monocarbonsäuren in freier Form einsetzt. Man kann aber auch umgekehrt verfahren und die Dicarbonsäuren in freier Form oder als – soweit möglich – Anhydride und die Monocarbonsäuren in Form ihrer Salze verwenden. In jedem Fall wird man dafür Sorge tragen, dass das Verhältnis freier Säuren zu den Salzen einem Gesamtneutralisationsgrad der obengenannten Definition entspricht.

Unter den bevorzugt einzusetzenden Alkalimetallsalzen wählt man zweckmässigerweise die am leichtesten erhältlichen, nämlich die Natrium- oder Kaliumsalze, vorzugsweise die Natriumsalze.

Man kann aber auch so verfahren, dass man die Säuren in freiem Zustand oder in unter-neutralisierter Form einsetzt und das Neutralisierungsmittel getrennt in die Reaktoren einführt. Als Neutralisierungsmittel kann man die den obengenannten Salzen zugrundeliegenden Basen verwenden. Vorzugsweise wählt man KOH oder NaOH; letzteres ist von besonderem technischen Interesse.

Ausgangsmonomere c), die nicht unbedingt mit einpolymerisiert werden müssen, sind carboxylgruppenfreie, mit den Monomeren a) und b) copolymersierbare, vorzugsweise wasserlösliche Monomere. Hier seien z.B.
Acrylamid, Methacrylamid, Acrylnitril,
Methacrylnitril, Acrylamidosulfonsäure,
Vinylsulfonsäure, Allylsulfonsäure,
Vinylphosphonsäure, Allylphosphonsäure,
Vinylacetat, Vinylpropionat,
Hydroxyethyl- oder -propylacrylat,
Vinylglycol oder (Meth)acrylsäuremethyl- und -ethylester,
Dimethylaminoethyl(meth)-acrylat und
Diethylaminoethyl(meth)acrylat
genannt. Die genannten Sulfon- und Phosphonsäuren können ebenfalls unter Berücksichtigung des definitionsgemässen Neutralisationsgrades – in Form ihrer Alkalimetall- und/oder Ammonium- und/oder Aminsalze zum Einsatz gelangen oder mit zusätzlichem Neutralisierungsmittel neutralisiert werden.

Die Monomeren a) sind im Ansatz zu 60 bis 10, vorzugsweise 45 bis 20 Gew.-%, die Monomeren b) zu 40 bis 90, vorzugsweise 55 bis 80 Gew.-% anwesend. Die Monomeren c) können bis zu 20 Gew.-% eingesetzt werden.

Wasserlösliche radikalbildende Initiatoren sind z.B. Wasserstoffperoxid selbst, Peroxidisulfate, vor allem Na- oder Ammoniumperoxidisulfat, oder Azo-bis-(2-aminopropan)- -hydrochlorid sowie Kombinationen untereinander. Die Dosierung kann auf einmal in den ersten Reaktor erfolgen. Oftmals ist es jedoch von Vorteil, Teilmengen in alle Reaktoren zuzufahren.

Manchmal kann es vorteilhaft sein, Redox-Coinitiatoren wie beispielsweise Natriumsulfit, Natriumhydrogensulfit, Natriumdithionit, Triethanolamin, Ascorbinsäure und Salze von Schwermetallen in geringen Mengen zuzusetzen.

Die Initiatoren sind zweckmässigerweise zu 0,5 bis 6 Gew.% – bezogen auf die Summe der Monomeren – im Ansatz zugegen. Die Polymerisation findet in wässrigem Medium statt. Hierbei sollte die Konzentration zweckmässigerweise so gewählt werden, dass die wässrige Lösung 20 bis 70 Gew.%, vorzugsweise 40 bis 60 Gew.% an Gesamtmonomeren enthält.

Ausserdem können die bei radikalischen Polymerisationen in wässrigem Medium üblichen Regler, wie Thioglycolsäure oder $C_1$–$C_4$-Aldehyde, oder Kettenverlängerer wie Methylenbisacrylamid oder Divinylglycol zum Einsatz gelangen und zwar – bezogen auf die Summe der Monomeren – zu 0,1 bis 5 Gew.%.

Bei der Polymerisation geht man beispielsweise so vor, dass man zur Erstbefüllung der Reaktoren diskontinuierlich hergestellte Copolymerisatlösungen verwendet. Dann werden die Reaktoren auf die Polymerisationstemperatur erhitzt, wobei diese in weiten Grenzen zwischen 60 und 150 °C schwanken kann. Vorzugsweise wählt man Temperaturen zwischen 80 und 130 °C. Dann werden die Reaktanten zweckmässigerweise über Dosierpumpen oder sonstige Regeleinrichtungen den Reaktoren zudosiert. Man kann die Monomeren in 100%iger Form, das Neutralisationsmittel, den Initiator sowie das Wasser getrennt zuführen. Zweckmässigerweise führt man jedoch die Monomeren als Lösung in Wasser sowie die wässrigen Lösungen des Neutralisationsmittels und Initiators getrennt zu. Erfindungsgemäss werden in den ersten Reaktor der Kaskade die gesamte Dicarbonsäure, vorzugsweise als Säure bzw. als Anhydrid und mindestens 40% der Monocarbonsäure, die zu 20 bis 80, vorzugsweise 30 bis 70% neutralisiert sind, zugefahren und in den zweiten Reaktor der Rest der Monocarbonsäure zudosiert. Das Comonomer c) kann sowohl in den ersten als auch in alle Reaktoren verteilt eingegeben werden. Als Reaktionsgefässe der Kaskade wählt man, falls oberhalb der Siedetemperatur des Wassers gearbeitet wird, Druckgefässe, wie Autoklaven.

Nach beendeter Polymerisation stellt man dann je nach Verwendungszweck schwächer oder stärker alkalisch, wobei die Anhydridgruppen – sofern sich noch Anhydride im Ansatz befanden – verseift werden.

Die erhaltene wässrige Polymerisatlösung kann sofort verwendet werden. Die Polymerisate können aber auch durch Eindampfen der Lösung in getrockneter Form isoliert und z. B. in pulverförmige Waschmittel eingearbeitet werden. Schliesslich kann auch die wässrige Lösung direkt mit andere Waschmittelbestandteile enthaltenden wässrigen Lösungen vereinigt und den üblichen Sprühprozessen unterworfen werden.

Die Copolymerisate weisen K-Werte zwischen 8 und 100, meistens aber zwischen 10 und 60 auf. Sie entsprechen sämtlichen Erfordernissen, wie sie für gute Inkrustierungsinhibitoren gelten. Die Copolymerisate weisen Gehalte an nicht umgesetzten Dicarbonsäuren von weniger als 1,5% auf, was an sich schon deshalb überraschen muss, weil – besonders wenn man von Aklalimetallsalzen der Dicarbonsäuren, wie Maleinsäure, ausgeht – man eher das Gegenteil erwarten konnte, nämlich eine verschlechterte Polymerisation. Bekanntlich polymerisiert Maleinsäureanhydrid besser als die freie Maleinsäure oder ihr Alkalimetallsalz. Die nun folgenden Beispiele erläutern die Erfindung. Die K-Werte wurden von den vollneutralisierten Salzen nach H. Fikentscher, Cellulosechemie 13, S. 60 (1932) in 2%iger Lösung in Wasser bei 25 °C bestimmt. Die monomere Maleinsäure wurde auf polarographischem Wege bestimmt (siehe «Polarographische Arbeitsmethoden» von Dr. Mark von Stackelberg erschienen 1950 im Verlag Walter De Gruyter & Co, Berlin W 35).

Beispiele
Allgemeine Herstellungsvorschrift
Das Vorlagematerial für die Reaktoren wird durch diskontinuierliche Polymerisation, beispielsweise gemäss der älteren Anmeldung DE-A-3.147 489 erhalten. In drei Reaktoren werden entsprechend ihres Nutzinhaltes 1800 Teile der Copolymerisatlösung, wobei die Copolymerisate die in den jeweiligen Beispielen beschriebene Zusammensetzung aufweisen, vorgelegt und auf die gewünschte Temperatur (siehe Tabelle) erhitzt. Anschliessend werden die Einsatzstoffe gemäss Tabelle über Dosierpumpen in die Reaktoren dosiert. Der Ablauf aus den Reaktoren erfolgt ebenfalls mit Pumpen, wobei das Niveau in den Reaktoren konstant gehalten wird. Die in den Beispielen angegebenen Teile sind die Zulaufmengen pro Stunde. Die Kennzahlen der Copolymerisatlösungen werden gemessen nachdem die Reaktoren mindestens 4mal durchgesetzt sind, d.h. wenn mindestens 21 600 Gew.-Teile durchgefahren wurden.

Die Ergebnisse sind aus der folgenden Tabelle ersichtlich.

| Bsp. Nr. | Innentemperatur (°C) | | | Zulauf in Reaktor 1 | | | | Zulauf in Reaktor 2 | |
|---|---|---|---|---|---|---|---|---|---|
| | R1 | R2 | R3 | Mischung 1 (Teile) | Mischung 2 (Teile) | Mischung 3 (Teile) | Mischung 4 (Teile) | Mischung 5 (Teile) | Mischung 6 (Teile) |
| 1 | 100 | 100 | 100 | 153,4 $H_2O$<br>72,3 MSA<br>150 AS | 28,5 $H_2O_2$, 30%ig<br>56 $H_2O$ | 85 NaOH<br>225 $H_2O$ | 50 $H_2O$<br>50 AS | — | — |
| 2 | 100 | 100 | 100 | 153,4 $H_2O$<br>72,3 MSA<br>150 AS | 28,5 $H_2O_2$, 30%ig<br>56 $H_2O$ | 70 NaOH<br>210 $H_2O$ | 50 $H_2O$<br>50 AS | 15 NaOH<br>45 $H_2O$ | 7 $H_2O_2$, 30%ig<br>13 $H_2O$ |
| 3 | 90 | 100 | 100 | 153,4 $H_2O$<br>143 MS<br>71,5 AS | 28,5 $H_2O_2$, 30%ig<br>56 $H_2O$ | 83 NaOH<br>249 $N_2O$ | 71,5 $H_2O$<br>71,5 AS | 24 NaOH<br>72 $H_2O$ | 2,46 $Na_2S_2O_8$<br>25 $H_2O$ |
| 4 | 100 | 100 | 120 | 153,4 $H_2O$<br>72,3 MSA<br>150 MAS | 28,5 $H_2O_2$, 30%ig<br>56 $H_2O$ | 80 NaOH<br>240 $H_2O$ | 50 $H_2O$<br>50 AS | — | — |
| 5 | 80 | 90 | 100 | 130 $H_2O$<br>98,4 IS<br>100 AS | 3,7 $Na_2S_2O_8$<br>12,3 $H_2O_2$, 30%ig<br>56 $H_2O$ | 58 NaOH<br>174 $H_2O$ | 47,6 AS<br>50 $H_2O$ | 13 NaOH<br>25 $H_2O_2$ | 1.3 $(NH_4)_2S_2O_8$<br>25 $H_2O$ |
| 6 | 100 | 100 | 100 | 50 $H_2O$<br>20 MS<br>20 CS<br>20 AS<br>20 MAS | 10 $H_2O_2$, 30%ig<br>10 $H_2O$ | 33 KOH<br>28,5 $H_2O$ | 10 AS<br>10 MAS<br>20 $H_2O$ | — | 25 $H_2O_2$, 30%ig<br>7,5 $H_2O$ |
| 7 | 100 | 100 | 100 | 153,4 $H_2O$<br>72,3 MSA<br>110 AS<br>14,25 HEA<br>14,25 VAc | 28,5 $H_2O_2$, 30%ig<br>56 $H_2O$ | 60 NaOH<br>60 $H_2O$ | 33 AS<br>14,25 VS<br>14,25 VP | 15 NaOH<br>15 $H_2O$ | 14 $H_2O_2$, 30%ig<br>25 $H_2O$ |
| 8 | 100 | 100 | 100 | 153,4 $H_2O$<br>72,3 MSA<br>110 AS<br>14,25 DMAEA<br>14,25 MA | 28,5 $H_2O_2$, 30%ig<br>56 $H_2O$ | 60 NaOH<br>60 $H_2O$ | 33 AS<br>14,25 DMAEA<br>14,25 AN | — | 14 $H_2O_2$, 30%ig<br>25 $H_2O$ |
| 9 | 120 | 120 | 120 | 153,4 $H_2O$<br>143 MS<br>71,5 AS | 28,5 $H_2O_2$, 30%ig<br>56 $H_2O$ | 83 NaOH<br>249 $H_2O$ | 71,5 $H_2O$<br>71,5 AS | 24 NaOH<br>72 $H_2O$ | 25 $H_2O_2$, 30%ig<br>25 $H_2O$ |
| 10 | 100 | 100 | 100 | 153,4 $H_2O$<br>72,3 MSA<br>150,0 AS<br>3,0 $Na_2S_2O_5$ | 28,5 $H_2O_2$, 30%ig<br>56 $H_2O$ | 83 NaOH<br>249 $H_2O$ | 50 $H_2O$<br>50 AS | — | — |

| Bsp. Nr. | Zulauf in Reaktor 3 Mischung 7 (Teile) | | Feststoff-gehalt (%) | K-Wert des Di-Natriumsalzes (2%ig, $H_2O$) | Mono-Gehalt an Dicarbonsäure (%) |
|---|---|---|---|---|---|
| 1 | – | | 37 | 46 | 0,76 |
| 2 | – | | 36 | 45 | 0,41 |
| 3 | – | | 33 | 43 | 0,65 |
| 4 | 7 | $H_2O_2$, 30%ig | 38 | 56 | 0,16 |
|   | 13 | $H_2O$ | | | |
| 5 | 4,5 | $H_2O_2$, 30%ig | 35 | 53 | 0,11 |
|   | 15 | $H_2O$ | | | |
| 6 | – | | 39 | 44 | 0,22 |
| 7 | – | | 44 | 39 | 0,34 |
| 8 | – | | 42 | 49 | 0,42 |
| 9 | – | | 32 | 29 | 0,08 |
| 10 | – | | 37 | 43 | 0,46 |

Abkürzungen:

| | | | | | | |
|---|---|---|---|---|---|---|
| MSA | = Maleinsäureanhydrid | AS | = Acrylsäure | AN | = Acrylnitril |
| MS | = Maleinsäure | MAS | = Methacrylsäure | VS | = Vinylsulfonsäure |
| IS | = Itaconsäure | HEA | = Hydroxyethylacrylat | DMAEA | = Dimethylaminoethylacrylat |
| CS | = Citraconsäure | VAc | = Vinylacetat | MA | = Methylacrylat |
| | | | | VP | = Vinylphosphonsäure |

## Patentansprüche

1. Verfahren zur Herstellung von Copolymerisaten, die monoethylenisch ungesättigte Mono- und Dicarbonsäuren als Monomereinheiten einpolymerisiert enthalten, und die einen K-Wert zwischen 8 und 100 (bestimmt nach Fikentscher an 2%igen wässrigen Lösungen der vollneutralisierten Salze bei 25 °C) haben, bei dem man – jeweils bezogen auf die Summe der Monomeren

a) 10 bis 60 Gew.-% einer monoethylenisch ungesättigten Dicarbonsäure mit 4 bis 6 C-Atomen, ihres Salzes und/oder gegebenenfalls ihres Anhydrids,

b) 90 bis 40 Gew.-% einer monoethylenisch ungesättigten Monocarbonsäure mit 3 bis 10 C-Atomen und/oder ihres Salzes und

c) 0 bis 20 Gew.-% eines sonstigen carboxylgruppenfreien monoethylenisch ungesättigten, mit a) und b) copolymerisierbaren Monomeren in Gegenwart von 0,5 bis 5 Gew.-% eines wasserlöslichen radikalbildenden Initiators in wässrigem Medium bei 60 bis 150 °C polymerisiert und gegebenenfalls die Anhydridgruppen verseift, und wobei man die Monomeren a) und b) in einer Form einsetzt, dass sie während der Polymerisationsreaktion zu 20 bis 80% neutralisiert sind, dadurch gekennzeichnet, dass man die Copolymerisation in einer aus mehreren Reaktoren bestehenden Reaktorkaskade kontinuierlich führt, wobei man in alle Reaktoren eine wässrige Lösung eines bereits hergestellten Copolymerisats aus a), b) und gegebenenfalls c) vorlegt, auf die erforderliche Reaktionstemperatur erhitzt, in den ersten Reaktor die Gesamtmenge an gegebenenfalls teilneutralisiertem a), mindestens 40 Gew.-% an gegebenenfalls teilneutralisiertem b), gegebenenfalls ganz oder teilweise c) und die zur Polymerisation ganz oder zum Teil notwendige Menge an Initiator sowie gegebenenfalls noch die zur definitionsgemässen Neutralisation nötige Menge eines Neutralisierungsmittels eindosiert, die Restmenge an gegebenenfalls neutralisiertem b) und gegebenenfalls c), die gegebenenfalls notwendige Restmenge an Initiator und Neutralisationsmittel in den zweiten Reaktor oder verteilt in den zweiten und die folgenden Reaktoren zugibt, und bei einer Verweilzeit von 0,5 bis 8 Stunden die Reaktionsteilnehmer aufeinander einwirken lässt.

2. Verfahren nach Anspruch 1, dadurch gekennzeichnet, dass man als Monocarbonsäure (Meth)acrylsäure und als Dicarbonsäure Maleinsäure und/oder die entsprechenden Salze einsetzt.

3. Verfahren nach Anspruch 1 oder 2, dadurch gekennzeichnet, dass die Reaktorkaskade aus 3 Kesseln besteht.

## Claims

1. A process for the preparation of copolymers which contain, as copolymerized monomer units, monoethylenically unsaturated mono- and dicarboxylic acids and have a K value of from 8 to 100 (determined according to Fikentscher on 2% strength aqueous solutions of the fully neutralized salts at 15 °C), in which

(a) from 10 to 60% by weight of a monoethylenically unsaturated dicarboxylic acid of 4 to 6 carbon atoms, its salt and/or, if desired, its anhydride,

(b) from 90 to 40% by weight of a monoethylenically unsaturated monocarboxylic acid of 3 to 10 carbon atoms and/or its salt, and

(c) from 0 to 20% by weight of another, carboxylfree monoethylenically unsaturated monomer which is copolymerizable with (a) and (b), the percentages being based in each case on the sum of the monomers, are polymerized in the presence of from 0.5 to 5% by weight of a watersoluble free-radical-forming initiator in an aqueous medium at from 60 to 150°C, and, if desired, the anhydride groups are hydrolyzed, the monomers (a) and (b) being employed in such a form that from 20 to 80% of their amount is neutralized during the polymerization reaction, characterized in that the copolymerization is carried out continuously in a reactor cascade comprising several reactors, and an aqueous solution of a pre-prepared copolymer of (a), (b) and, if desiered, (c) is initially charged into all the reactors and heated to the required reaction temperature, the total amount of unneutralized or partially neutralized (a), not less than 40% by weight of unneutralized or partially neutralized (b) and, if used, all or some of (c), and some or all of the amount of initiator required for polymerization, with or without the amount of neutralizing agent required for the neutralization according to the definition, are metered into the first reactor, the remaining amount of unneutralized or neutralized (b) and, if used, (c), and any remaining amount of initiator and neutralizing agent which may be required are introduced into the second reactor or are distributed over the second reactor and the downstream reactors, and the reactants are allowed to react together for a residence time of from 0.5 to 8 hours.

2. A process as claimed in claim 1, characterized in that acrylic acid or methacrylic acid is used as the monocarboxylic acid and maleic acid is used as the dicarboxylic acid, and/or the salts of these acids are employed.

3. A process as claimed in claim 1 or 2, characterized in that the reactor cascade consists of 3 kettles.

**Revendications**

1. Procédé de préparation de copolymères, dans lesquels sont copolymérisés des acides mono- et di-carboxyliques à insaturation mono-éthylénique comme unités monomères et qui possèdent une valeur K (selon Fikentscher, déterminée à 25°C sur une solution aqueuse à 2% des sels entièrement neutralisés), dans lequel on polymérise en milieu aqueux, entre 60 et 150°C et en présence de 0,5 à 5% en poids d'un amorceur hydrosoluble, formant des radicaux (libres)

a) 10 à 60% en poids d'un acide dicarboxylique à insaturation mono-éthylénique en $C_4$ à $C_6$, d'un sel et (ou) éventuellement de l'anhydride d'un tel acide,

b) 90 à 40% en poids d'un acide monocarboxylique à insaturation mono-éthylénique en $C_3$ à $C_{10}$ et (ou) d'un sel d'un tel acide et

c) 0 à 20% en poids d'un autre monomère à insaturation mono-éthylénique, exempt de groupes carboxyle et copolymérisable avec a) et b), – les pourcentages se rapportant au poids total des monomères –, les groupes anhydride étant éventuellement saponifiés, et les monomères a) et b) étant mis en œuvre sous une forme telle que, pendant la réaction de polymérisation, ils soient neutralisés à raison de 20 à 80%, caractèrisé en ce que l'on réalise la copolymérisation en continu dans une série de réacteurs en cascade en introduisant dans chacun des réacteurs une solution aqueuse d'un copolymère de a) et de b) et éventuellement de c), préparé précédemment, en chauffant à la température réactionnelle requise, en ajoutant de façon dosée dans le premier réacteur la quantité totale de a), éventuellement neutralisé partiellement, au moins 40% en poids de b), éventuellement neutralisé en partie, la totalité ou une fraction de c) éventuel, la totalité ou une fraction de l'amorceur nécessaire pour la polymérisation, ainsi qu'éventuellement la quantité d'un agent neutralisant nécessaire pour obtenir une neutralisation telle que définie, et dans le deuxième réacteur ou partiellement dans le deuxième réacteur et partiellement dans le ou les réacteurs subséquents le restant de b) éventuellement neutralisé, le réstant éventuel de c) et les quantités éventuellement encore requises de l'amorceur et de l'agent neutralisant, et en laissant réagir les partenaires de la réaction pendant 0,5 à 8 heures.

2. Procédé suivant la revendication 1, caractérisé en ce que l'acide monocarboxylique est choisi parmi l'acide (méth)acrylique et ses sels et l'acide dicarboxylique parmi l'acide maléique et ses sels.

3. Procédé suivant la revendication 1 ou 2, caractérisé en ce que la cascade de réacteurs est composée de trois chaudières.